# EUROPÄISCHE PATENTSCHRIFT

(11) **EP 2 618 918 B1**
(45) Veröffentlichungstag und Bekanntmachung des Hinweises auf die Patenterteilung: **31.10.2018**
(21) Anmeldenummer: 11729428.0
(22) Anmeldetag: 06.07.2011
(51) Int. Cl.: B01D 71/38, B01D 61/36

(54) **MEMBRAN MIT EINER PORENFREIEN TRENNSCHICHT, SOWIE VERWENDUNG UND VERFAHREN ZUR HERSTELLUNG EINER MEMBRAN**
MEMBRANE HAVING A PORE-FREE SEPARATION LAYER, AND ALSO USE AND METHOD FOR PRODUCTION OF A MEMBRANE
MEMBRANE AYANT UNE COUCHE DE SÉPARATION EXEMPTE DE PORES AINSI QU'UTILISATION ET PROCÉDÉ DE FABRICATION D'UNE MEMBRANE

(30) Priorität: 20.09.2010 EP 10177656
(43) Veröffentlichungstag der Anmeldung: 31.07.2013
(73) Patentinhaber: Sulzer Chemtech AG, 8404 Winterthur (CH)
(72) Erfinder: FRANIA, Michael, 66299 Friedrichsthal (DE); HÜBNER, Andreas, 59425 Unna (DE); MAUS, Eva, CH-4055 Basel (CH)
(74) Vertreter: Henkel, Breuer & Partner
(86) Internationale Anmeldenummer: PCT/EP2011/061405
(87) Internationale Veröffentlichungsnummer: WO 2012/038110

(56) Entgegenhaltungen:
- DE-C1- 4 410 763
- US-A- 4 971 699
- US-A- 5 607 557

## Beschreibung

Die Erfindung betrifft eine Membran mit einer porenfreien Trennschicht, umfassend ein Polymergemisch zur Abtrennung von einfachen Alkoholen und Wasser aus ihren Gemischen mit anderen organischen Fluiden mittels Pervaporation oder Dampfpermeation, sowie die Verwendung und ein Verfahren zur Herstellung einer solchen Membran gemäss dem Oberbegriff des unabhängigen Anspruchs der jeweiligen Kategorie.

Die Erfindung betrifft somit neben einer neuen Komposit-Polymermembran als solches, insbesondere ein Verfahren zur Herstellung von Komposit-Polymermembranen und deren Verwendung zur Abtrennung von einfachen Alkoholen aus ihren Gemischen mit organischen Flüssigkeiten nach den Verfahren Pervaporation und Dampfpermeation. Ferner können diese Membranen auch zur gleichzeitigen Abtrennung von Wasser und einfachen Alkoholen aus ihren Gemischen mit organischen Flüssigkeiten nach den o.g. Verfahren eingesetzt werden.

Es ist bekannt, dass zum Beispiel einfache Alkohole wie Methanol, Ethanol und Propanol mit organischen Flüssigkeiten wie z.B. flüssigen Kohlenwasserstoffen, Ethern, Ketonen, Acetalen, Estern und Aminen sehr gut mischbar sind. Es ist ferner bekannt, dass solche Mischungen durch Destillation nur unter erheblichem Aufwand getrennt werden können, weil häufig Azeotrope auftreten. Bei azeotropen Mischungen hat die flüssige Phase die gleiche Zusammensetzung wie die im Gleichgewicht stehende Dampfphase. Dadurch ist die weitere destillative Trennung ohne Anwendung von Schleppmitteln nicht möglich.

Dem Fachmann ist bekannt, dass in diesem Fall auch bei der azeotropen Zusammensetzung einige Komponenten durch die Pervaporation bzw. Dampfpermeation getrennt werden können.

In den EP 0 096 339, EP 0 442 557 und US-A-4,802,988 sowie US 4,892,661 sind z.B. Membranen beschrieben, die geeignet sind, Wasser aus seinen Gemischen mit organischen Flüssigkeiten durch Pervaporation abzutrennen. Es ist bekannt, dass das flüssige Gemisch mit der einen Seite der Polymermembran in Berührung gebracht wird, während auf der anderen Seite der Polymermembran ein Vakuum angelegt oder ein Inertgasstrom vorbeigeführt wird. Eine oder mehrere Komponenten des flüssigen Gemisches können durch die Polymermembran permeieren. Schlechter permeierende Komponenten bleiben in der flüssigen Phase zurück und reichern sich in ihr an. Die Trennschicht der Membran besteht in der Praxis oft aus vernetztem Polyvinylalkohol (PVA), die auf eine poröse Stützschicht aus einem Stoff, der für eine Ultrafiltrationsmembran geeignet ist, aufgetragen ist. Wegen der gewünschten thermischen Stabilität und chemischen Beständigkeit sind poröse Stützschichten aus Polyacrylnitril (PAN), Polysulfon (PS) und aus der hydrolisierten bzw. verseiften Celluloseacetaten bevorzugt. Die poröse Stützschicht ist meistens auf ein Vlies oder gewebtes Tuch als Trägerschicht aufgebracht.

In der US 4 877 529 ist die Abtrennung von Methanol aus Mischungen mit Dimethylcarbonat (DMC) und t-Methylbutylether (MTBE) beschrieben, die verwendeten Membranen haben Trennschichten aus PVA oder aus einem perfluorierten saueren lonenaustauscher, dessen Säuregruppe durch quartäres Ammoniumsalz neutralisiert ist.

Die DE 4 234 521 beschreibt eine Membran mit einer durch Plasmapolymerisation hergestellten Trennschicht, die zur Abtrennung von Methanol aus seinen Mischungen mit z.B. MTBE und DMC geeignet ist.

In der US 4 960 519 ist ein Verfahren zur Abtrennung von Methanol aus seinen Gemischen mit sauerstoffhaltigen Verbindungen beschrieben; letztere umfassen organische Ether, Aldehyde, Ketone und Ester. Die Membran besteht aus einer nicht-porösen Trennschicht aus einem Gemisch aus PVA und PVA-Polyacrylsäure. Diese Trennschicht ist auf einer Stützschicht aus PAN aufgetragen.

Die EP 0 674 940 beschreibt die Verwendung einer Membran zur Abtrennung von einfachen Alkoholen, insbesondere von Ethanol, aus Mischungen mit anderen organischen Flüssigkeiten nach den Verfahren der Pervaporation und Dampfpermeation. Die Trennschicht der Membran besteht aus einem Film aus einem Homo-, Co- oder Terpolymer. Als Homopolymer wird Poly-N-N-dimethylaminoethyl-methacrylat (Poly-DMAEMA) verwendet, als Copolymer ein solches aus DMAEMA und N-Vinylpyrrolidon (NVP) oder aus DMAEMA und N-Vinylcaprolactam (NVCL) und als Terpolymer ein solches aus DMAEMA, NVP und NVCL. Besonders bevorzugt sind solche Polymere, in denen das Stickstoffatom der Amingruppe des DMAEMA als quarternäres Ammonium vorliegt. Bevorzugte Quarternierungsagentien sind Dimethylsulfat du Diethylsulfat sowie Monochlormethan und Monochlorethan, Monojod- und Monobrom -Methan und -Ethan. Zur Herstellung der Trennschicht wird das Homopolymer, Co- oder Terpolymer in Wasser, Ethanol oder deren Mischungen gelöst und auf eine poröse Stützschicht aufgetragen. Die Verdampfung des Lösungsmittels erfolgt bei 50°C-100°C, anschließend wird der Film durch Wärmebehandlung vernetzt, besonders bevorzugt bei Temperaturen zwischen 120°C-160°C. Durch die Wärmebehandlung wird der Polymerfilm laut Angabe in Wasser und Ethanol unlöslich.

Der technische Einsatz von nach dem Stand der Technik bekannten Membranen für die Abtrennung von leichten Alkoholen aus organischen Gemischen ist allerdings stark beschränkt, vor allem bei der Anwesenheit von Wasser bei höheren Temperaturen. Die Membran quillt in vielen organischen Lösemitten wie Ethern, Ketonen und mehrwertige Alkohole dann teilweise so stark, dass sie zerstört werden kann. Membranen mit Festionen ändern ihr Verhalten, wenn sie mit Wasser oder Salzen in Berührung kommen.

Aus der DE 44 10 763 C1 ist eine Membran mit einer porenfreien Trennschicht bekannt, bei der die Trennschicht aus Polydimethylaminoethylmethacrylat-Homopolymeren oder N-Vinylpyrolidon-Dimethylaminoethyl-methacrylat- Copolymer oder N-Vinylcaprolactam-Dimethylaminoethyl-methacrylat- Copolymer oder N-Vinylcaprolactam-N-Vinylpyrrolidon-Dimethyl-aminoethyl-methacrylat-Terpolymeren besteht. Eine dazu ähnliche Membran wird auch in der US 5,607,557 beschrieben.

Die Aufgabe der Erfindung ist es daher, eine Membran zur Abtrennung von einfachen Alkoholen aus organischen Gemischen, sowie die Verwendung und ein Verfahren zur Herstellung einer solchen Membran bereit zu stellen, die die aus dem Stand der Technik bekannten Nachteile vermeidet. Die Membran soll vor allem, aber nicht nur, auch bei der Anwesenheit von Wasser und bei höheren Temperaturen zuverlässig eingesetzt werden können, und soll dabei anders als im Stand der Technik in organischen Lösemitten wie Ethern, Ketonen und mehrwertige Alkohole nicht so stark quellen, dass sie zerstört werden kann. Dabei soll die Membran gleichzeitig gute Selektivitäten, Flüsse und Stabilität auch bei höheren Wasserkonzentrationen und höheren Temperaturen zeigen und in Abwesenheit von Wasser eine hohe Selektivität und gleichzeitig einen hohen Fluss für Alkohole zeigen.

Die diese Aufgaben in apparativer und verfahrenstechnischer Hinsicht lösenden Gegenstände der Erfindung sind durch die Merkmale der unabhängigen Ansprüche 1, 7 und 9 gekennzeichnet.

Die jeweiligen abhängigen Ansprüche beziehen sich auf besonders vorteilhafte Ausführungsformen der Erfindung.

Die Erfindung betrifft somit eine Membran mit einer porenfreien Trennschicht umfassend ein Polymergemisch zur Abtrennung von einfachen Alkoholen und Wasser aus ihren Gemischen mit anderen organischen Fluiden mittels Pervaporation oder Dampfpermeation. Erfindungsgemäss besteht das Polymergemisch aus mindestens zwei unterschiedlichen Polymeren, wobei eines der mindestens zwei unterschiedlichen Polymere aus der Gruppe der Polymere bestehend aus Polyvinylalkohol, Vinylacetat-Ethylen-Vinylchlorid, Vinylchlorid-Ethylen-Acrylester oder Vinylacetat-Vinylchlorid-Acrylester ausgewählt ist und das andere der mindestens zwei unterschiedlichen Polymere aus der Gruppe der Polymeren bestehend aus Poly-N-N-dimethylaminethyl-methacrylat (Poly-DMAEMA), einem Copolymer aus DMAEMA und N-Vinylpyrrolidon (NVP), einem Copolymer aus DMAEMA und N-Vinylcaprolactam (NVCL) oder einem Terpolymer aus DMAEMA, NVP und NVCLausgewählt ist.

Es hat sich in überraschender Weise gezeigt, dass Membranen hergestellt werden können, deren Verwendung nach der vorliegenden Erfindung zur Abtrennung von einfachen Alkoholen oder einfachen Alkoholen und Wasser gleichzeitig gute Selektivitäten, Flüsse und Stabilität auch bei höheren Wasserkonzentrationen und höheren Temperaturen zeigt. Auch in Abwesenheit von Wasser sind die Selektivität und Fluss für Alkohole sehr hoch.

Dabei ist in einem bevorzugten Ausführungsbeispiel die Polymerlösung auf einer poröse Unterstruktur mit asymmetrischer Porenstruktur aufgetragen und die poröse Unterstruktur liegt ihrerseits auf einer Trägerschicht auf.

Verwendet wird eine erfindungsgemässe Membran zur Abtrennung von einfachen Alkoholen und Wasser aus ihren Gemischen mit anderen organischen Fluiden mittels Pervaporation oder Dampfpermeation.

Bevorzugt ist bei Verwendung einer erfindungsgemässen Membran der durch die Membran permeierende Alkohol ein Methanol, Ethanol oder ein Propanol und die von der Membran zurückgehaltene Substanz ist im Speziellen ein aliphatischer oder aromatischer Kohlenwasserstoff, ein Ether, Keton, Ester oder ein höherer Alkohol oder ein Gemisch von Komponenten aus dieser Gruppe.

Die Erfindung betrifft weiter ein Verfahren zur Herstellung einer oben beschriebenen Membran, wobei zur Herstellung der Trennschicht eine Lösung des Polymergemisches in Wasser, Ethanol oder Ethanol-Wassergemischen verwendet wird, wobei die Polymerlösung auf eine poröse Unterstruktur mit asymmetrischer Porenstruktur aufgetragen wird und die poröse Unterstruktur ihrerseits auf einer Trägerschicht aufgelegt wird, und wobei nach dem Auftragen der Polymerlösung das Lösungsmittel verdampft wird und die Membran einer Wärmebehandlung unterworfen wird.

Gemäss der vorliegenden Erfindung wird das Polymergemisch aus mindestens zwei unterschiedlichen Polymeren hergestellt, wobei eines der mindestens zwei unterschiedlichen Polymere aus der Gruppe der Polymere bestehend aus Polyvinylalkohol, Vinylacetat-Ethylen-Vinylchlorid, Vinylchlorid-Ethylen-Acrylester oder Vinylacetat-Vinylchlorid-Acrylester ausgewählt wird und das andere der mindestens zwei unterschiedlichen Polymere aus der Gruppe der Polymeren bestehend aus Poly-N-N-dimethylaminethyl-methacrylat (Poly-DMAEMA), einem Copolymer aus DMAEMA und N-Vinylpyrrolidon (NVP), einem Copolymer aus DMAEMA und N-Vinylcaprolactam (NVCL) oder einem Terpolymer aus DMAEMA, NVP und NVCLausgewählt wird.

In einem für die Praxis besonders wichtigen Ausführungsbeispiel erfolgt die Nach dem Auftragen der Polymerlösung kann das das Lösungsmittel verdampft und die Membran einer Wärmebehandlung unterworfen werden. In einem für die Praxis besonders wichtigen Ausführungsbeispiel erfolgt die Wärmebehandlung bei einer Temperatur zwischen 100°C und 200°C, vorzugsweise bei einer Temperatur von 130°C bis 180°C. In vielen praktischen Fällen wird dabei die Wärmebehandlung während einer Zeitspanne von 1 min bis 60 min, vorzugsweise während einer Zeitspanne von 5 min bis 30 min durchgeführt,

Besonders bevorzugt wird die Wärmebehandlung in einer oder mehreren Stufen, besonders bevorzugt in zwei Stufen durchgeführt. Die Temperatur einer nachfolgenden Stufe kann dabei beispielsweise höher als die Temperatur einer vorhergehenden Stufe sein.

Im Folgenden werden einige für die Praxis besonders wichtige Ausführungsbeispiel der vorliegenden Erfindung etwas detaillierter beschrieben.

Die Trennschicht der nach vorliegender Erfindung verwendeten Membranen besteht aus einem Polymerblend-Film, gefertigt aus mindestens zwei unterschiedlichen Polymeren. Dabei ist eines der mindestens zwei unterschiedlichen Polymere aus der Gruppe der Polymere bestehend aus Polyvinylalkohol, Vinylacetat-Ethylen-Vinylchlorid, Vinylchlorid-Ethylen-Acrylester oder Vinylacetat-Vinylchlorid-Acrylester ausgewählt und das andere der mindestens zwei unterschiedlichen Polymere aus der Gruppe der Polymeren bestehend aus Poly-N-N-dimethylaminethyl-methacrylat (Poly-DMAEMA), einem Copolymer aus DMAEMA und N-Vinylpyrrolidon (NVP), einem Copolymer aus DMAEMA und N-Vinylcaprolactam (NVCL) oder einem Terpolymer aus DMAEMA, NVP und NVCLausgewählt wird.

Der Gehalt an Polyvinylalkohol kann zwischen 1 Gew% bis 90 Gew%, bevorzugt 3 Gew% bis 80 Gew%, der Gehalt an anderen Polymeren zwischen 10 Gew% bis 99 Gew%, bevorzugt 20 Gew% bis 97 Gew% betragen.

Polyvinylalkohol wird als wässrige Lösung beigemischt, die Vernetzung erfolgt durch Veresterung mit Dicarbonsäuren, vorzugsweise solchen, die zusätzlich noch Hydroxyl- und/oder Ketogruppen enthalten, durch Veretherung unter der katalytischen Einwirkung der Säuren, durch Acetalisierung mittels Aldehyden oder Dialdehyden oder durch eine kombinierte Anwendung dieser Verfahren.

Zur Herstellung der Trennschicht wird das Polymergemisch in Wasser, Ethanol oder Wasser-Ethanol-Mischung gelöst. Die Konzentrationen zwischen 2 Gew% und 60 Gew% (je nach Molekulargewicht) sind bevorzugt, besonders bevorzugt sind Konzentrationen zwischen 3 Gew% und 20 Gew%. Die Lösung wird mittels einer dem Fachmann an sich bekannten Methode auf eine Unterlage aufgetragen. Bevorzugt befindet sich die porenfreie Trennschicht auf einer porösen Stützschicht. Als besonders vorteilhaft hat sich erwiesen, den Polymerfilm als Trennschicht auf eine Komposit-Struktur aufzubringen. Wie dem Fachmann bekannt, besteht sie aus einer Trägerschicht, z.B. einem Vlies oder Gewebe aus Polyester, Polypropylen, Polyethylen, Polyamid, Polyphenylensufid oder anderen Polymeren. Auf dieser Trägerschicht befindet sich eine poröse Stützschicht mit asymmetrischer Porenstruktur, bevorzugt aus Polyacrylnitril, Polysulfon, Polyvinylidenfluorid, Polyamid, Polyetherimid oder anderen Polymeren.

Nach dem Auftrag und Verdampfen des Lösungsmittels bildet sich ein porenfreier, dichter Polymerfilm, dessen Dicke abhängig von der Konzentration und Auftragsmethode abhängt. Polymerfilms zwischen 0,5µm und 20µm Dicke sind bevorzugt, Polymerfilms von 1µm bis 6µm sind besonders bevorzugt.

Das Verdampfen des Lösungsmittels erfolgt bei 60°C bis 160°C. Anschließend wird der Film durch Wärmebehandlung vernetzt, vorzugsweise bei Temperaturen von 100°C bis 200°C, besonders bevorzugt 130°C bis 180°C, in Zeiten zwischen 1min bis 60min. Als vorteilhaft hat sich erwiesen, die Wärmebehandlung in mehreren Stufen durchzuführen, wobei ein zweistufiges Vorgehen bevorzugt ist, z.B. 1 min bis 6 min bei 100°C bis 140°C, dann in einer zweiten Stufe 6min bis 30min lang bei 150°C bis 180°C.

### Beispiel 1:

Auf eine poröse Stützschicht aus Polyacrylnitril (PAN), die eine asymmetrische Porenstruktur aufweist und auf einer Trägerschicht aus einem Polyestervlies aufgebracht ist, wird eine Lösung von 6% Polymermischung in Wasser mit einer Auftragsrolle aufgetragen. Die Polymermischung besteht aus Polymeren in Verhältnis von 70 Gew% eines Copolymeren aus Vinylpyrrolidon und Dimethylaminethyl-Methacrylat und 30 Gew% Anteil von Polyvinylalkohol, und wird mit einer Auftragsrolle aufgetragen. Das Lösungsmittel wird in 6 min bei 125°C verdampft. Danach wird die Membran für 20 min bei 150°C thermisch behandelt und in zweitem Schritt 10 min bei 170°C thermisch weiter nachvernetzt. Die Trennschicht der fertigen Membran hat eine Dicke von ca. 3µm. In einem Pervaporationsversuch wird sie bei 80°C mit einem Zulaufgemisch aus 40% Methanol und 60% Tetrahydrofuran getestet. Das Permeat enthält 72 Gew% Methanol, der Methanol-Fluß beträgt 8 kg/m²h bei permeatseitigem Druck von 20 mbar. Das Permeat wird durch Kühlung mit einem Trockeneis-Ethanol-Gemisch kondensiert.

### Beispiel 2:

Auf die gleiche Unterstruktur wie in Beispiel 1 wird eine 5% wässrige Polymermischung, bestehend aus 90 Gew% Anteil eines quaternären Copolymeren aus Vinylpyrrolidon und Dimethylaminomethyl-Methacrylat) und 10 Gew% Anteil eines Copolymeren aus Vinylacetat, Ethylen und Vinylchlorid (VAC/E/VC), mit einer Auftragsrolle aufgetragen. Das Verdampfen des Lösungsmittels erfolgte nach 7 min bei 130°C, danach wird die Membran 21 min bei 150°C wärmebehandelt. Ein Pervaporationsversuch mit einem Zulaufgemisch aus 21 Gew% Ethanol und 79 Gew% Ethyl-t-Butylether (ETBE) bei 62°C ergab 94 Gew% Ethanol im Permeat bei 1,35 kg/m²h Ethanolfluss bei permeatseitigem Druck von 13 mbar. Das Permeat wird durch Kühlung mit einem Trockeneis-Ethanol-Gemisch kondensiert.

### Beispiel 3:

Auf die gleiche Unterstruktur wie in Beispiel 1 wird eine 4,5% wässrige Polymermischung, bestehend aus 30 Gew% Anteil eines Copolymeren aus Vinylpyrrolidon und Dimethylaminethyl-Methacrylat und 70 Gew% Anteil von Polyvinylalkohol, mit einer Auftragsrolle eingetragen. Das Verdampfen des Lösungsmittels erfolgte nach 6 min bei 150°C, danach wird die Membran 24 min bei 145°C nachvernetzt. Ein Pervaporationsversuch mit einem Zulaufgemisch aus 6 Gew% Wasser, 14 Gew% Aceton, 50 Gew% Methanol und 30 Gew% Ketal bei 95°C ergab im Permeat 33 Gew% Wasser, 60 Gew% Methanol und 7% Aceton bei 2,1 kg/m²h Methanolfluss und 1,1 kg/m²h Wasserfluss bei permeatseitigen Druck von 13 mbar. Das Permeat wird durch Kühlung mit einem Trockeneis-Ethanol-Gemisch kondensiert.

### Beispiel 4:

Auf die gleiche Unterstruktur wie in Beispiel 1 wird eine 4,5% wässrige Polymermischung aus 60 Gew% Anteil eines Copolymeren aus Vinylpyrrolidon und Dimethylaminethyl-Methacrylat) und 40% Anteil Polyvinylalkohol, mit einer Auftragsrolle aufgetragen. Das Verdampfen des Lösungsmittels erfolgte nach 6 min bei 150°C, danach wird die Membran 15 min bei 150°C thermisch behandelt und in zweitem Schritt 10 min bei 180°C weiter nachvernetzt. Ein Pervaporationsversuch mit einem Zulaufgemisch aus 30 Gew% Methanol und 70 Gew% Aceton bei 60°C ergab 70 Gew% Methanol im Permeat bei 2,5 kg/m²h Methanolfluss bei permeatseitigen Druck von 10 mbar. Das Permeat wird durch Kühlung mit einem Trockeneis-Ethanol-Gemisch kondensiert.

### Beispiel 5:

Auf die gleiche Unterstruktur wie in Beispiel 1 wird eine 5% wässrige Polymermischung, bestehend aus 90 Gew% Anteil eines quaternären Copolymeren aus Vinylpyrrolidon und Dimethylaminethyl-Methacrylat) und 7 Gew% Anteil eines Copolymeren aus Vinylacetat, Ethylen und Vinylchlorid (VAC/E/VC) und 3 Gew% Anteil von Polyvinylalkohol, mit einer Auftragsrolle aufgetragen. Das Verdampfen des Lösungsmittels erfolgte nach 7 min bei 130°C, danach wird die Membran 21 min bei 150°C wärmebehandelt. Ein Pervaporationsversuch mit einem Zulaufgemisch aus 21 Gew% Ethanol und 79 Gew% Ethyl-t-Butylether (ETBE) bei 62°C ergab 97 Gew% Ethanol im Permeat bei 0,65 kg/m²h Ethanolfluss bei permeatseitigem Druck von 13 mbar. Das Permeat wird durch Kühlung mit einem Trockeneis-Ethanol-Gemisch kondensiert.

Es versteht sich, dass die vorliegende Erfindung nicht auf die im Rahmen dieser Anmeldung explizit beschriebenen Ausführungsbeispiele beschränkt ist, sondern insgesamt auch alle Kombinationen umfasst, die der Fachmann in naheliegender Weise zur Ausbildung weiterer Ausführungsbeispiele ohne weiteres versteht.

## Patentansprüche

1. Membran mit einer porenfreien Trennschicht umfassend ein Polymergemisch zur Abtrennung von einfachen Alkoholen und Wasser aus ihren Gemischen mit anderen organischen Fluiden mittels Pervaporation oder Dampfpermeation, **dadurch gekennzeichnet, dass** das Polymergemisch aus mindestens zwei unterschiedlichen Polymeren besteht, wobei
- eines der zwei unterschiedlichen Polymere aus der Gruppe der Polymeren bestehend aus Polyvinylalkohol, Vinylacetat-Ethylen-Vinylchlorid, Vinylchlorid-Ethylen-Acrylester oder Vinylacetat-Vinylchlorid-Acrylester ausgewählt ist und
- das andere der zwei unterschiedlichen Polymere aus der Gruppe der Polymeren bestehend aus Poly-N-N-dimethylaminethyl-methacrylat (Poly-DMAEMA), einem Copolymer aus DMAEMA und N-Vinylpyrrolidon (NVP), einem Copolymer aus DMAEMA und N-Vinylcaprolactam (NVCL) oder einem Terpolymer aus DMAEMA, NVP und NVCL ausgewählt ist.

2. Membran nach Anspruch 1, wobei das andere der zwei unterschiedlichen Polymere ein Copolymer aus DMAEMA und NVP ist.

3. Membran nach Anspruch 1, wobei eines der zwei unterschiedlichen Polymere Polyvinylalkohol oder Vinylacetat-Ethylen-Vinylchlorid ist und das andere der zwei unterschiedlichen Polymere ein Copolymer aus DMAEMA und NVP ist.

4. Membran nach Anspruch 1, wobei die Polymerlösung auf eine poröse Unterstruktur mit asymmetrischer Porenstruktur aufgetragen ist, und die poröse Unterstruktur ihrerseits auf einer Trägerschicht aufliegt.

5. Membran nach einem der Ansprüche 1 oder 2, wobei der Gehalt an Polyvinylalkohol zwischen 1 Gew% bis 90 Gew%, bevorzugt 3 Gew% bis 80 Gew% beträgt.

6. Membran nach einem der vorangehenden Ansprüche, wobei der Gehalt an anderen Polymeren zwischen 10 Gew% bis 99 Gew%, bevorzugt zwischen 20 Gew% bis 97 Gew% beträgt.

7. Verwendung einer Membran nach einem der vorangehenden Ansprüche zur Abtrennung von einfachen Alkoholen und Wasser aus ihren Gemischen mit anderen organischen Fluiden mittels Pervaporation oder Dampfpermeation.

8. Verwendung einer Membran nach Anspruch 7, wobei der durch die Membran permeierende Alkohol ein Methanol, Ethanol oder ein Propanol ist, und die von der Membran zurückgehaltene Substanz ein aliphatischer oder aromatischer Kohlenwasserstoff ist, ein Ether, Keton, Ester oder ein höherer Alkohol oder ein Gemisch von Komponenten aus dieser Gruppe ist.

9. Verfahren zur Herstellung einer Membran nach einem der vorangehenden Ansprüche, wobei zur Herstellung der Trennschicht eine Lösung des Polymergemisches in Wasser, Ethanol oder Ethanol-Wassergemischen verwendet wird, wobei die Polymerlösung auf eine poröse Unterstruktur mit asymmetrischer Porenstruktur aufgetragen wird und die poröse Unterstruktur ihrerseits auf einer Trägerschicht aufgelegt wird, und wobei nach dem Auftragen der Polymerlösung das Lösungsmittel verdampft wird und die Membran einer Wärmebehandlung unterworfen wird.

10. Verfahren nach Anspruch 9, wobei die Wärmebehandlung bei einer Temperatur zwischen 100°C und 200°C, vorzugsweise von 130°C bis 180°C erfolgt.

11. Verfahren nach Anspruch 9 oder 10, wobei die Wärmebehandlung während einer Zeitspanne von 1 min bis 60 min, vorzugsweise während einer Zeitspanne von 5 min bis 30 min durchgeführt wird.

12. Verfahren nach einem der Ansprüche 9 bis 11, wobei die Wärmebehandlung in einer oder mehreren Stufen durchgeführt wird.

## Claims

1. Membrane having a pore-free separation layer including a polymer mixture for separating simple alcohols from water from their mixtures with other organic fluids by means of pervaporation or vapor permeation, **characterized in that** the polymer mixture is composed of at least two different polymers, wherein
- one of two different polymers is selected from the group consisting of polyvinyl alcohol, vinyl acetate-ethylene-vinyl chloride, vinyl chloride-ethylene-acrylic ester or vinyl acetate-vinyl chloride-acrylic ester and
- the other of the two different polymers is selected from the group of polymers consisting of poly-N-N-dimethyl amino ethyl-methacrylate (poly-DMAEMA), a copolymer of DMAEMA and N-vinyl pyrrolidone (NVP), a copolymer of DMAEMA and N-vinyl caprolactam (NVCL) or a terpolymer of DMAEMA, NVP and NVCL.

2. Membrane in accordance with claim 1, wherein the other of the two different polymers is copolymer of DMAEMA and NVP.

3. Membrane in accordance with claim 1, wherein one of the two different polymers is polyvinyl alcohol or vinyl acetate-ethylene-vinyl chloride, and the other of the two different polymers is a copolymer of DMAEMA and NVP.

4. Membrane in accordance with claim 1, wherein the polymer solution is applied to a porous sub-structure having an asymmetrical pore structure and the porous sub-structure in turn lies on a carrier layer.

5. Membrane in accordance with claim 1 or 2, wherein the content of poly vinyl alcohol amounts to between 1 % by weight to 90 % by weight, preferably 3 % by weight to 80 % by weight.

6. Membrane in accordance with one of the preceding claims, wherein the content of other polymers amounts to between 10 % by weight and 99 % by weight, preferably between 20 % by weight and 97 % by weight.

7. Use of a membrane in accordance with one of the preceding claims for separating simple alcohols and water from their mixtures with other organic fluids by means of pervaporation of vapor permeation.

8. Use of a membrane in accordance with claim 7, wherein the alcohol permeating through the membrane is methanol, ethanol or propanol and the substance held back by the membrane is an aliphatic or aromatic hydrocarbon, an ether, ketone, ester or higher alcohol or mixture of components from this group.

9. A method for manufacturing a membrane in accordance with one of the preceding claims, wherein for the manufacturing of the separation layer a solution of the polymer mixture in water, ethanol or ethanol-water-mixtures is used, wherein the polymer solution is supplied to a porous sub-structure having an asymmetrical pore structure and the porous sub-structure is in turn applied to a carrier layer, and wherein the solvent is vaporized after the application of the polymer solution and the membrane is subjected to a heat treatment.

10. A method in accordance with claim 9, wherein the heat treatment takes place at a temperature between 100°C and 200°C, preferably between 130°C and 180°C.

11. A method in accordance with claims 9 or 10, wherein the heat treatment is carried out during a time period of 1 min to 60 min, preferably during a time period of 5 min to 30 min.

12. A method in accordance with one of claims 9 to 11, wherein the heat treatment is carried out in one or more stages.

## Revendications

1. Membrane comportant une couche de séparation exempte de pores, contenant un mélange de polymères pour séparer des alcools simples et de l'eau de leurs mélanges avec d'autres fluides organiques par pervaporation ou par perméation de vapeur, **caractérisée en ce que** le mélange de polymères est constitué d'au moins deux polymères différents, dans laquelle
- l'un des deux polymères différents est choisi parmi le groupe de polymères comprenant alcool polyvinylique, acétate de vinyle-éthylène-chlorure de vinyle, chlorure de vinyle-éthylène-ester acrylique, ou acétate de vinyle-chlorure de vinyle-ester acrylique, et
- l'autre des deux polymères différents est choisi parmi le groupe de polymères comprenant poly-N-N-diméthylaminéthyl méthacrylate (poly-DMAEMA), un copolymère de DMAEMA et N-vinylpyrrolidone (NVP), un copolymère de DMAEMA et de N-vinylcaprolactame (NVCL), ou un terpolymère de DMAEMA, NVP et NVCL.

2. Membrane selon la revendication 1, dans laquelle l'autre des deux polymères différents est un copolymère de DMAEMA et de NVP.

3. Membrane selon la revendication 1, dans laquelle l'un des deux polymères différents est de l'alcool polyvinylique, ou de l'acétate de vinyle-éthylène-chlorure de vinyle, et l'autre des deux polymères différents est un copolymère de DMAEMA et de NVP.

4. Membrane selon la revendication 1, dans laquelle la solution polymérique est appliquée sur une sous-structure poreuse ayant une structure de pores asymétrique, et la sous-structure poreuse repose à son tour sur une couche porteuse.

5. Membrane selon l'une des revendications 1 ou 2, dans laquelle la teneur en alcool polyvinylique est de 1 % en poids à 90 % en poids, de préférence de 3 % en poids à 80 % en poids.

6. Membrane selon l'une des revendications précédentes, dans laquelle la teneur en autres polymères est de 10 % en poids à 99 % en poids, de préférence de 20 % en poids à 97 % en poids.

7. Utilisation d'une membrane selon l'une des revendications précédentes pour séparer des alcools simples et de l'eau de leurs mélanges avec d'autres fluides organiques par pervaporation ou par perméation de vapeur.

8. Utilisation d'une membrane selon la revendication 7, dans laquelle l'alcool passant par perméation à travers la membrane est un méthanol, un éthanol ou un propanol, et la substance retenue par la membrane est un hydrocarbure aliphatique ou aromatique, un éther, une cétone, un ester ou un alcool supérieur ou un mélange de composants parmi ce groupe.

9. Procédé de fabrication d'une membrane selon l'une des revendications précédentes, dans lequel, afin de réaliser la couche de séparation, on utilise une solution du mélange de polymères dans de l'eau, de l'éthanol ou dans des mélanges éthanol-eau, la solution polymérique étant appliquée sur une sous-structure poreuse ayant une structure de pores asymétrique, et la sous-structure poreuse étant posée à son tour sur une couche porteuse, et après l'application de la solution polymérique, on fait évaporer le solvant et on soumet la membrane à un traitement thermique.

10. Procédé selon la revendication 9, dans lequel le traitement thermique s'effectue à une température comprise entre 100 °C et 200 °C, de préférence de 130 °C à 180 °C.

11. Procédé selon la revendication 9 ou 10, dans lequel le traitement thermique s'effectue pendant une période temporelle de 1 minute à 60 minutes, de préférence pendant une période temporelle de 5 minutes à 30 minutes.

12. Procédé selon l'une des revendications 9 à 11, dans lequel le traitement thermique s'effectue en une ou en plusieurs étapes.
